# EUROPEAN PATENT APPLICATION

(11) **EP 4 843 834 A1**
(43) Date of publication of application: **25.11.2026**
(21) Application number: 25226183.9
(22) Date of filing: 22.12.2025
(51) Int. Cl.: B60R 9/06, B60R 13/10

(54) **TILTING FIXED LOCKING STRUCTURE FOR A VEHICLE CARRIER RACK**

(30) Priority: 22.05.2025 TW 114119224
(71) Applicant: King Rack Industrial Co., Ltd., Taichung City (TW)
(72) Inventor: Wang, Chiu-Kuei, Taichung City (TW); Espesset, Hugues, 81160 SAINT-JUERY (FR); Girod, Frédéric, 81160 SAINT-JUERY (FR)
(74) Representative: Cabinet Chaillot

(57) **Abstract**

A tilting fixed locking structure for a vehicle carrier rack includes a hollow central rod, a sliding member, a spring, a fixed seat, and a hook-shaped locking recess. The sliding member is disposed within a sliding slot at the front end of the central rod and driven by spring force to slide toward the fixed seat. When the sliding member enters the hook-shaped locking recess via the stopper angle portion, it forms a stable locking and positioning through the stopper angle portion. The sliding member can be driven to disengage from the hook-shaped locking recess via a cable in order to release the carrier rack. The locking structure exhibits characteristics such as smooth guidance, floating positioning, and anti-vibration resistance to disengagement.

## Description

### BACKGROUND OF THE INVENTION

### 1. Fields of the invention

The present invention relates to a vehicle carrier apparatus structure, and more particularly, to a tilting fixed locking structure applicable to a carrier rack mounted at rear end of a vehicle to provide stable positioning of the carrier rack during vehicle operation and enable rapid release of the lock upon user action to allow the carrier rack to tilt or rotate.

### 2. Descriptions of Related Art

Conventional carrier racks are commonly installed at the rear end of vehicles to transport bicycles, luggage, or other items. Some designs further incorporate tilting functionality to facilitate loading and unloading or to clear the rear door of the vehicle. However, to maintain stable positioning of the carrier rack during vehicle operation, most existing devices employ mechanical locking structures such as hook-type, pin-insertion type, or bolt-type mechanisms. Users must manually perform insertion, tightening, or flipping operations to complete the locking process. This procedure is cumbersome and complicated. Moreover, because tight fitting between components is required, these mechanisms are prone to loosening, wear, and jamming issues.

Additionally, while some designs attempt to utilize elastic elements for structural positioning, they lack guiding structures between the locking component and the load-bearing frame. This requires users to spend considerable time aligning the locking position. Furthermore, during vehicle operation, if the carrier rack shifts due to vibration, there is risk of the locking component loosening or accidentally disengaging, compromising user safety.

Therefore, the industry urgently requires a locking structure that combines automatic guidance, stable positioning, and anti-vibration anti-disengagement functions. Such a structure should simplify user operation procedures and enhance both the stability and convenience of the carrier rack.

The present invention intends to provide a tilting fixed locking structure for a vehicle carrier rack to eliminate shortcomings mentioned above.

### SUMMARY OF THE INVENTION

The present invention relates to a tilting fixed locking structure for a vehicle carrier rack and comprises a fixed seat disposed at an end of a vehicle body, which is equipped with a hook-shaped locking recess. A central rod is disposed at a central section of the carrier rack, wherein the central rod is a hollow tubular member with a sliding slot formed at its front end. A sliding member is slidably disposed within the sliding slot. A spring is disposed within an interior of the central rod, with one end connected to a rear end of the central rod and the other end abutting against the sliding member, so as to cause the sliding member to receive a pushing force and slide toward the fixed seat.

The hook-shaped locking recess of the present invention is equipped with a stopper angle portion configured to guide the sliding member into the hook-shaped locking recess, and forming an inclined stopper angle portion at the upper edge of the recess. After the sliding member is positioned, the inclined stopper angle portion at an upper edge of the hook-shaped locking recess prevents the sliding member from disengaging under vibration conditions, so as to cause the sliding member to form a floating position in a locked state, thereby combining the structural benefits of rapid engagement and resistance to loosening. By the pushing force provided by the spring, the sliding member is automatically guided into the hook-shaped locking recess, producing a distinct positioning feel and feedback effect during operation, thereby enhancing operational stability and convenience of use. When the sliding member slides into the recess under the pushing force of the spring, it can automatically self-align and be stably embedded, forming a locking state with a floating accommodation space. This guiding structure can tolerate a certain degree of structural deviation between components and maintains a firm lock during vehicle vibration, preventing the sliding member from jumping out or loosening.

The characteristics and benefits of the present invention are briefly summarized as follows:
The sliding member, driven by the pushing force of the spring, can automatically self-align and enter the hook-shaped locking recess, enhancing operational smoothness.

The hook-shaped recess is equipped with a guidance angle and a stopper segment. Locking is rapid and resistance to disengagement is high.

The sliding member, when released, can completely disengage from the recess, facilitating the tilting action of the carrier rack.

The structure is simplified with fewer component parts, resulting in high durability and installation convenience.

The primary object of the present invention is to address the problems of existing carrier rack positioning structures, namely complex operation procedures, insufficient stability, and susceptibility to loosening due to vibration. The invention provides a tilting fixed locking structure equipped with automatic guidance, rapid engagement, and anti-disengagement functions.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a perspective view of the present invention;
Figure 2 is an exploded view of the structure of the present invention;
Figure 3 is a structural diagram of the present invention in locked state;
Figure 4 is a structural diagram of the present invention in unlocked state;
Figure 5 is a usage illustration diagram of the present invention (I);
Figure 6 is a usage illustration diagram of the present invention (II);
Figure 7 is a usage illustration diagram of the present invention (III);
Figure 8 is a usage illustration diagram of the present invention (IV), and
Figure 9 is an angle specification diagram of the stopper angle portion of the fixed seat of the present invention.

### DETAILED DESCRIPTION OF THE PREFERRED EMBODIMENT

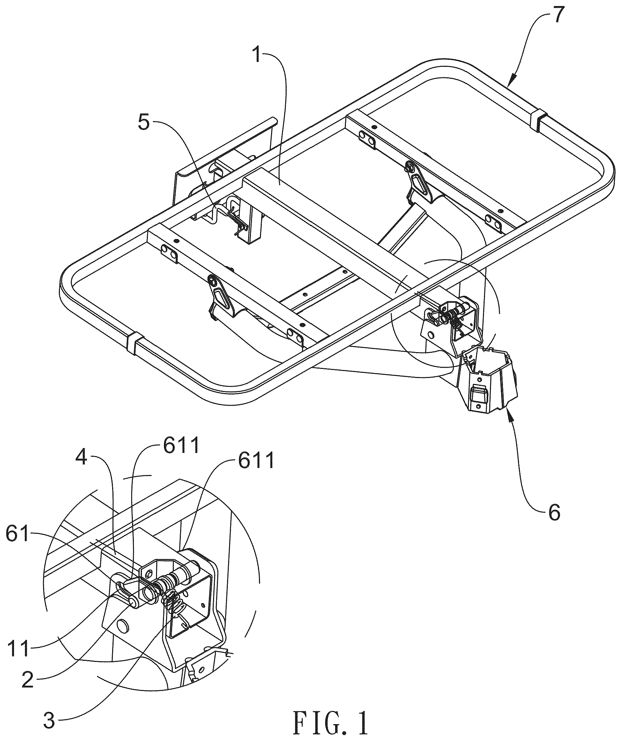

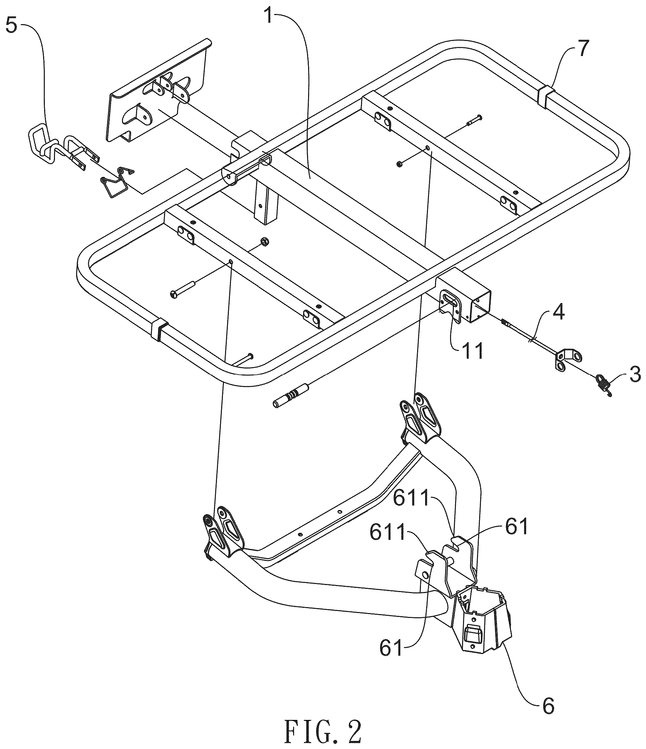

As shown in Figures 1 to 3, the present invention is a tilting fixed locking structure disposed between a carrier rack 7 and a vehicle body. The carrier rack 7 is mounted at the rear end of a vehicle, with a central rod 1 disposed at a central section of its body. The central rod 1 is a hollow tubular member with a sliding slot 11 formed at its front end. A sliding member 2 capable of sliding along the axial direction is disposed within the sliding slot 11. The sliding member 2 is in contact with a spring 3. The spring 3 is disposed within the interior of the central rod 1, with one end engaged on a fixed segment at the rear end of the central rod 1 and the other end abutting against the sliding member 2, applying a forward pushing force to the sliding member 2.

The sliding member 2 is connected to a cable 4. The cable 4 extends rearward and is connected to an operating unit 5, for example disposed below a license plate bracket. A user can manipulate the operating unit 5 by flicking or pressing it, pulling the cable 4 to move the sliding member 2 rearward, thereby achieving the release function of the locking structure.

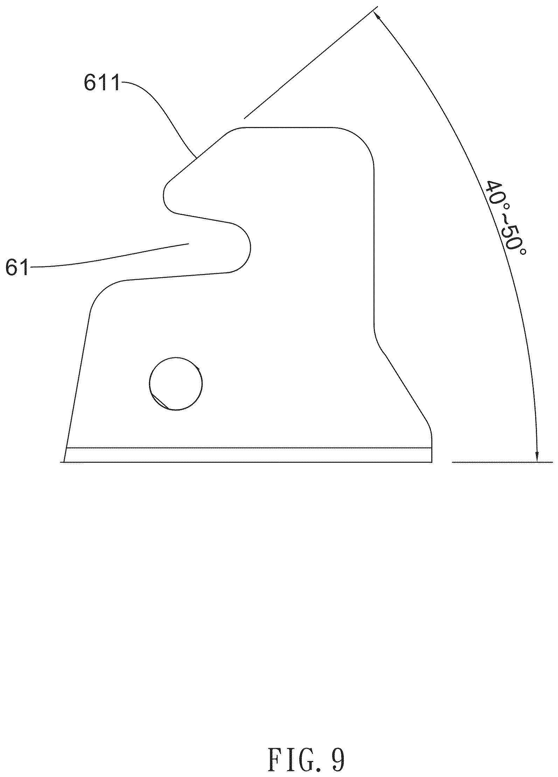

As shown in Figures 1 to 3, a fixed seat 6 is provided at the vehicle body end with a hook-shaped locking recess 61 oriented toward the front end of the central rod 1. The hook-shaped locking recess 61 has a guidance inclination angle and an upward-inclining stopper angle portion 611. This structure is designed to accommodate and position the sliding member 2, forming a stable locking engagement. As shown in Figure 9, the stopper angle portion 611 is designed with an angle of approximately between 40 degrees and 50 degrees, which can effectively guide the sliding member into the hook-shaped locking recess 61, balancing both smooth guidance and stable blocking.

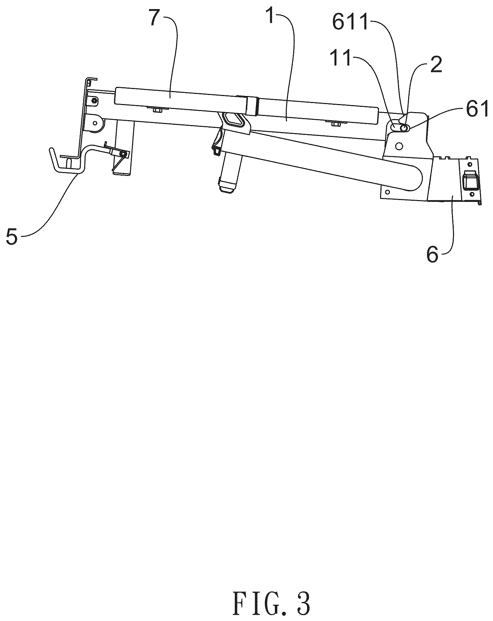

As shown in Figure 3, the sliding member 2 is locked and positioned within the hook-shaped locking recess 61 of the fixed seat 6. The outer edge of the sliding member 2 is in contact with the stopper angle portion 611, forming a stable locking engagement state. The sliding member 2 is pressed against the interior of the recess by the pushing force of the spring 3, and the structure has completed its positioning.

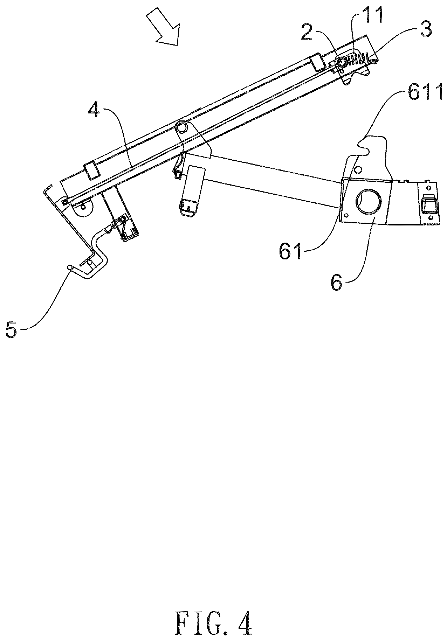

As shown in Figure 4, when the user operates the operating unit 5, the cable 4 pulls the sliding member 2 rearward, causing it to disengage from the hook-shaped locking recess 61, and the carrier rack 7 begins to tilt and rotate, entering a tiltable state.

The above is the introduction of each component of the present invention. The following describes the usage method of the present invention.

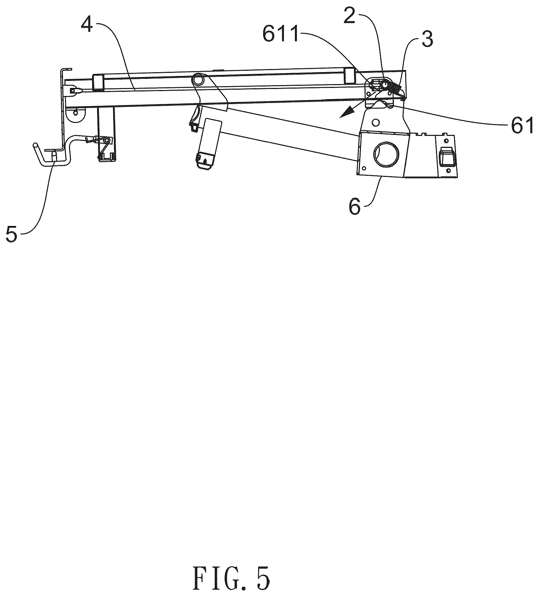

As shown in Figure 5, when the user moves the carrier rack 7 toward the fixed seat 6, the sliding member 2 will first contact the stopper angle portion 611 of the fixed seat 6. The stopper angle portion 611 has a certain angle that can guide the sliding member 2 to align with the entrance of the hook-shaped locking recess 61. Since the sliding member 2 is continuously driven by the pushing force of the spring 3, it will naturally slide down along the guiding surface toward the hook-shaped locking recess 61. In this embodiment, the guidance inclination angle θ of the hook-shaped locking recess 61 is an inward-receding angle with an angle range between 10° and 20°.

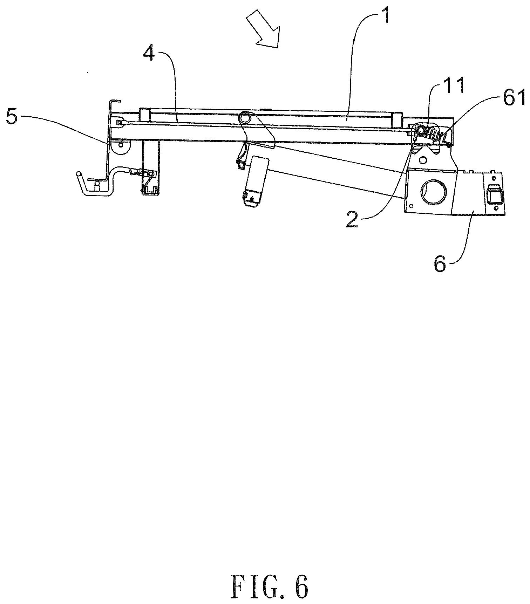

As shown in Figure 6, when the sliding member 2 contacts the entrance of the hook-shaped locking recess 61, due to the guidance inclination angle design and the spring pushing force, the sliding member 2 will slide into the interior of the recess, further entering the locking segment.

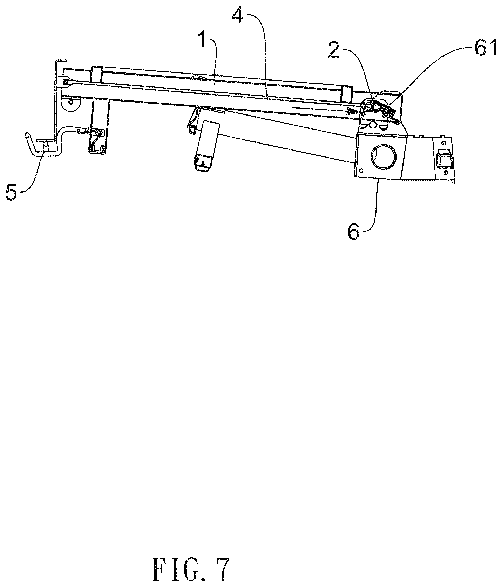

As shown in Figure 7, after the sliding member 2 enters the hook-shaped locking recess 61, the spring 3 will immediately push the sliding member 2 forward, causing it to press against the internal structure of the hook-shaped locking recess 61, exhibiting a dynamic positioning state.

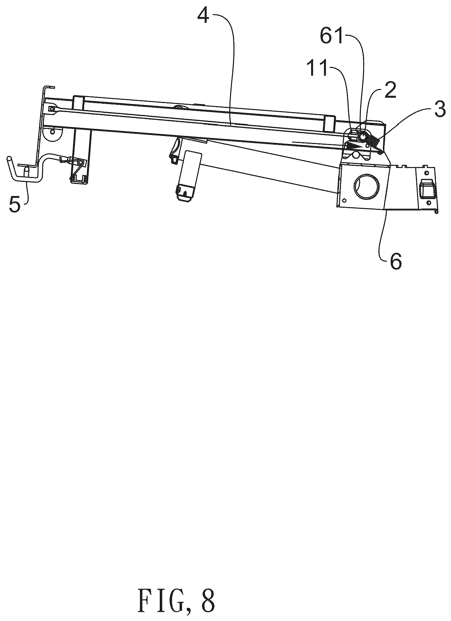

As shown in Figure 8, the sliding member 2 completes embedding and stable positioning within the recess. In this state, even if the carrier rack 7 experiences slight oscillation due to vibration from vehicle travel, the sliding member 2 will press more firmly against the hook-shaped locking recess 61 due to the continuous pushing force of the spring 3, producing a "more vibration, more tighter lock" reinforcement effect, significantly enhancing the reliability of resistance to disengagement and loosening.

The present invention have the following advantages:
The sliding member 2 can automatically enter the hook-shaped locking recess 61, with rapid and precise engagement.

The guidance angle and stopper angle portion 611 can achieve stable positioning and prevent slipping.

The user can quickly disengage the embedding between the sliding member 2 and the hook-shaped locking recess 61 by manipulating the operating unit 5 to pull the cable 4.

By utilizing the pushing force of the spring 3 and the self-locking action of the structure responding to vibration, the resistance to loosening and safety are enhanced.

While we have shown and described the embodiment in accordance with the present invention, it should be clear to those skilled in the art that further embodiments may be made without departing from the scope of the present invention.

## Claims

1. A tilting fixed locking structure for a vehicle carrier rack, comprising:
a fixed seat (6) disposed at an end of a vehicle body, and having a hook-shaped locking recess (61);
a central rod (1) disposed at a central section of a carrier rack (7), the central rod (1) being a hollow tubular member with a sliding slot (11) formed at a front end thereof;
a sliding member (2) slidably disposed within the sliding slot (11);
a spring (3) disposed within an interior of the central rod (1), one end of the spring (3) connected to a rear end of the central rod (1), and the other end of the spring (3) abutting against the sliding member (2), applying a pushing force toward the fixed seat (6);
**characterized in that**:
the hook-shaped locking recess (61) is provided with a stopper angle portion (611) configured to guide the sliding member (2) into the hook-shaped locking recess (61), after the sliding member (2) is positioned, the inclined stopper angle portion (611) at an upper edge of the hook-shaped locking recess (61) prevents the sliding member (2) from disengaging under vibration conditions, so as to cause the sliding member (2) to form a floating position in a locked state, thereby combining the structural benefits of rapid engagement and resistance to loosening;
by the pushing force provided by the spring (3), the sliding member (2) is automatically guided into the hook-shaped locking recess (61), producing a distinct positioning feel and feedback effect during operation, thereby enhancing operational stability and convenience of use.

2. The tilting fixed locking structure for a vehicle carrier rack as claimed in claim 1, wherein the sliding member (2) is connected to an operating unit (5) by a cable (4), the operating unit (5) is mountable below a license plate bracket and configured to drive the sliding member (2) to disengage from the hook-shaped locking recess (61) in order to release the carrier rack (7).

3. The tilting fixed locking structure for a vehicle carrier rack as claimed in claim 1, wherein when in the locked state, the sliding member (2) is pushed by the spring (3) against the interior of the hook-shaped locking recess (61), such that the sliding member (2) does not disengage or separate during vibration generated while the vehicle is operating,.

4. The tilting fixed locking structure for a vehicle carrier rack as claimed in claim 1, wherein the hook-shaped locking recess (61) includes a guiding surface at an entrance of the hook-shaped locking recess (61) so as to guide the sliding member (2) into the interior of the hook-shaped locking recess (61) during a reset process, thereby enhancing locking efficiency and fault tolerance.

5. The tilting fixed locking structure for a vehicle carrier rack as claimed in claim 1, wherein when the sliding member (2) is located in the hook-shaped locking recess (61), a structural feedback for locking and positioning is generated so as to enable users to determine that the positioning has been completed.

6. The tilting fixed locking structure for a vehicle carrier rack as claimed in claim 1, wherein when released upon operation, the sliding member (2) is disengaged from the hook-shaped locking recess (61), allowing the carrier rack (7) to rotate to a tilted state.

7. The tilting fixed locking structure for a vehicle carrier rack as claimed in claim 1, wherein a stopper angle portion of the hook-shaped locking recess (61) is between 40 degrees and 50 degrees.
